# EUROPEAN PATENT SPECIFICATION

(11) **EP 0 853 013 B1**
(45) Date of publication and mention of the grant of the patent: **03.12.2003**
(21) Application number: 98100464.1
(22) Date of filing: 13.01.1998
(51) Int. Cl.: B60K 5/00

(54) **Small Vehicle**
Kleinfahrzeug
Petit véhicule

(30) Priority: 13.01.1997 JP 367897
(43) Date of publication of application: 15.07.1998
(73) Proprietor: YAMAHA HATSUDOKI KABUSHIKI KAISHA, Iwata-shi Shizuoka-ken, 438 (JP)
(72) Inventor: Kawai, Kiyoshi, Iwata-shi, Shizuoka-ken (JP); Matsumoto, Satoshi, Iwata-shi, Shizuoka-ken (JP)
(74) Representative: Grünecker, Kinkeldey, Stockmair & Schwanhäusser Anwaltssozietät

(56) References cited:
- US-A- 3 656 571
- PATENT ABSTRACTS OF JAPAN vol. 009, no. 206 (M-406), 23 August 1985 (1985-08-23) -& JP 60 067208 A (YAMAHA HATSUDOKI KK), 17 April 1985 (1985-04-17)

## Description

This invention relates to a small vehicle, e.g. a cart for racing or amusement. More specifically, the invention relates to a small vehicle with an engine mounted on a vehicle body, wherein the engine comprises a power output shaft transmitting power of the engine from a drive sprocket mounted on the power output shaft toward a drive wheel.

A racing or amusement cart in which an engine is mounted on a vehicle body, power from a crankshaft bearing-supported on crankcases of the engine is taken out through a power takeoff shaft, and the power is transmitted from a drive sprocket mounted on the power takeoff shaft toward a drive wheel, is already known from US-A-3656571 to the applicant.

In such a small vehicle, engine power is taken out from the left or right side of the crankcase. If the drive sprocket on the drive wheel side is positioned for example between a drive wheel shaft bearing and the drive wheel for the ease of replacing the drive sprocket located on the drive wheel side, the engine is to be mounted in reference to the drive sprocket. If the engine is mounted in reference to the drive sprocket, the engine would either project out of the vehicle body resulting in weight imbalance or located deep in the vehicle body, taking up a seat space. In such a way, the engine mount is restricted in terms of space.

It is an objective of the present invention is to improve a small vehicle of the type as mentioned above so as to be more compact in size and offering good handling.

This objective is solved according to the present invention by a small vehicle according to the preamble of claim 1, wherein a part of a crankcase in a vicinity of a crankcase portion covering a crank web is recessed to form a space in which the drive sprocket is disposed.

Since the drive sprocket attached to the power takeoff shaft is positioned near the crankcase center, the engine dimension in the crankshaft axis direction may be reduced. As a result, degree of freedom of the engine position relative to the vehicle body is increased, the driver area may be secured easily, and the engine may be mounted in a favorable position without adversely affecting appropriate positioning of the drive sprocket on the drive wheel side and the driver, and with favorable well balanced vehicle weight distribution.

Further preferred embodiments of the present invention are laid down in the further subclaims.

In the following, the present invention is explained in greater detail by means of a preferred embodiment thereof in conjunction with the drawings, wherein:
FIG. 1 is a side view of the small vehicle,
FIG. 2 is a plan view of the small vehicle,

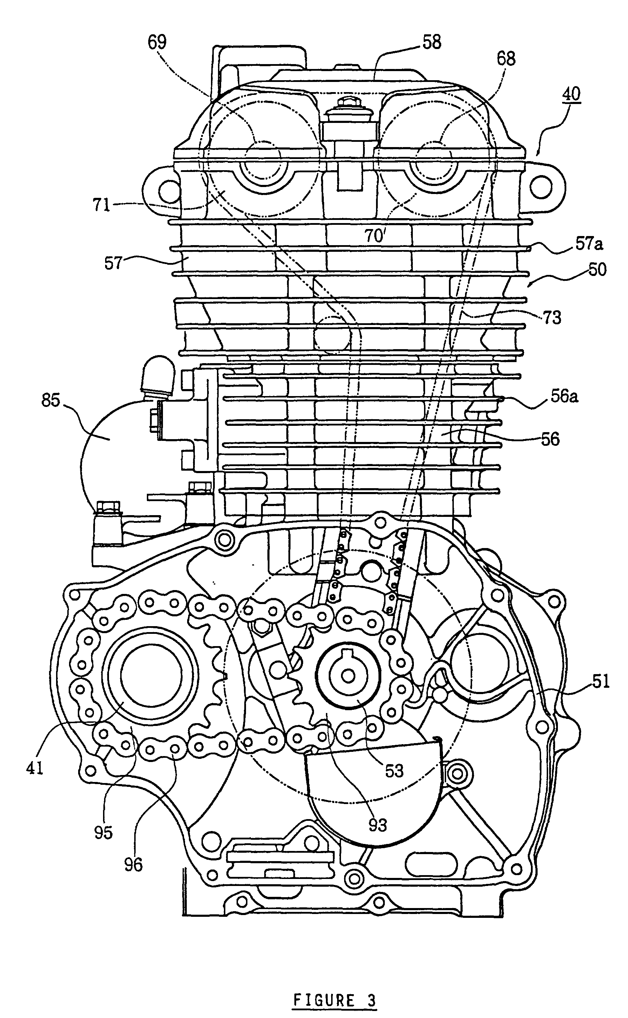

FIG. 3 is a side view of the engine as seen from the clutch side with the crankcase cover removed,

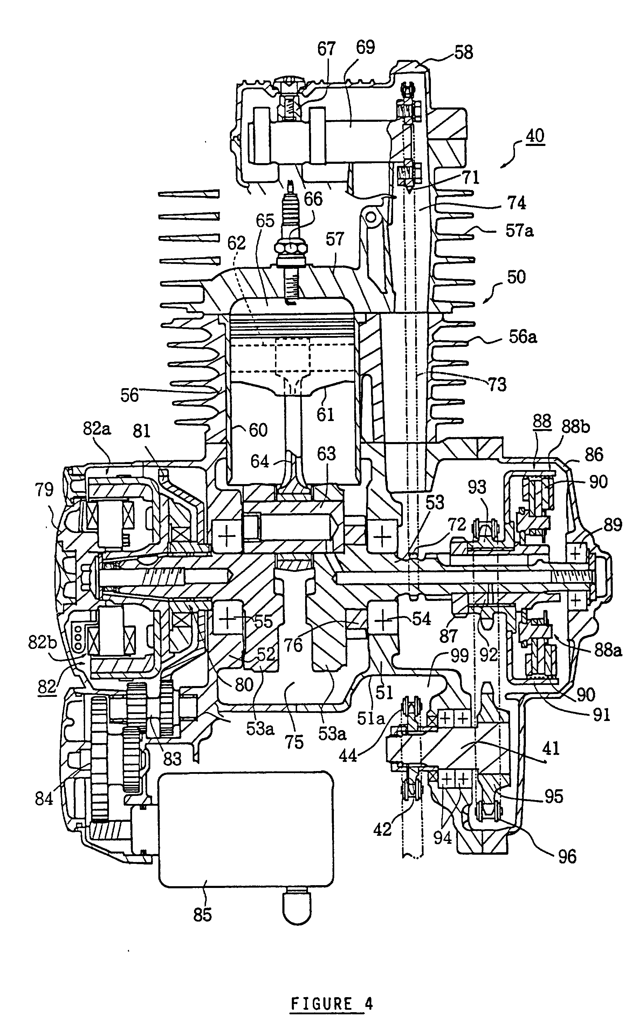

FIG. 4 is a cross-sectional view of the engine, and

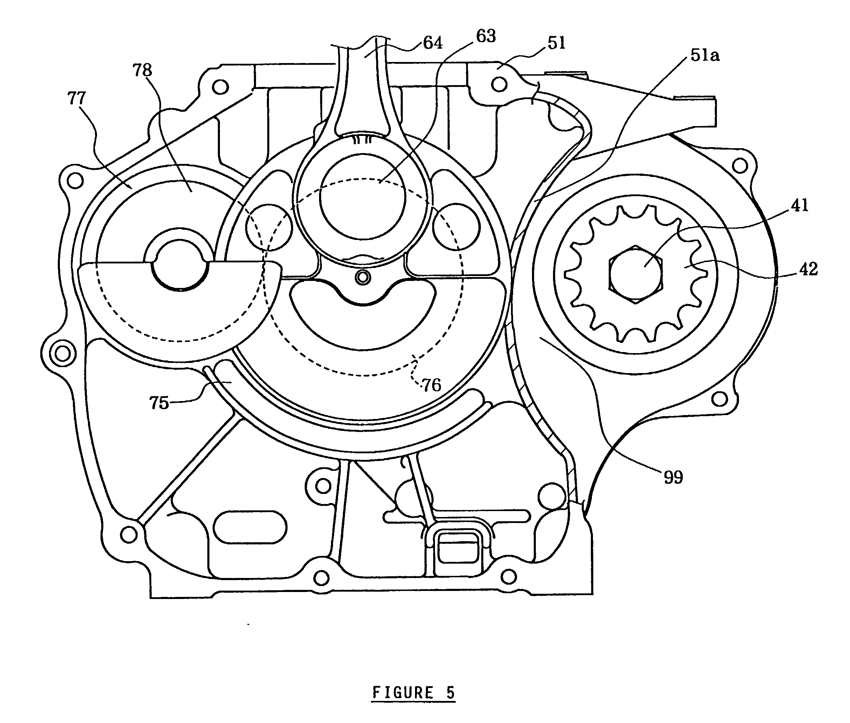

FIG. 5 is a side-view of the crankcase as seen from the clutch side.

A racing cart as a small vehicle 1 has a vehicle body 5 comprising right and left main members 2, 2; a front side member 3, and a rear side member 4. The right and left side members 2, 2 are interconnected with front and rear cross members 6, 6, with the front member 3 connected to the front parts of the right and left main members 2, 2 and with the rear member 4 connected to the rear parts of the right and left main members 2, 2. A driver area is secured in the center of the vehicle body 5. A seat 7 is disposed in the driver area and supported on the right and left main members 2, 2 by means of seat stays 8, 8.

Side protectors 10, 10 are attached to the right and left main members 2, 2 by means of side members 9, 9. A front protector 12 projecting forward is attached to the fore-end of the front side member 3 by means of front members 11, 11. Front wheels 13, 13 are attached for free rotation to right and left sides of the front side member 3.

A floor 20 is disposed in a position surrounded with the front side cross member 6, the right and left main members 2, 2, and the front side member 3. An accelerator pedal 21 is disposed on the right of the front member 11 connected to the front side of the front side member 3. A brake pedal 22 is disposed on the left side of the front member 11. A plate 23 for an entry number label is erected with a tilt toward a steering wheel 24 in the center of the front side member 3.

Front wheel shafts 25, 25 of the right and left front wheels 13,13 are connected through rods 26, 26 to a steering shaft 27. The steering shaft 27 is supported on the front side cross member 6 by means of a support member 28. As the steering wheel 24 is operated, the steering shaft 27 is rotated, and the right and left front wheels 13, 13 are steered through the rods 26, and the front wheel shafts 25. A fuel tank 29 is disposed in a position below the steering wheel 24 and on the floor 20.

In the rear part of the right and left main members 2, 2, drive wheel shafts 30, 30 are rotatably supported through bearings 31, 31. Rear wheels 32, 32 as drive wheels for rotating together with the rear wheel shafts 30, 30 are disposed at both ends of the rear wheel shafts 30, 30. An engine 40 is mounted on a support member 39 interconnecting the front and rear cross members 6, 6, and on the right side main member 2, so that the engine 40 is located to the right of the seat 7.

Power of the engine 40 is taken out with a power takeoff shaft 41 and transmitted from a drive sprocket 42 attached to the power takeoff shaft 41 to a drive sprocket 43 attached to the drive wheel shaft 30 through a chain 44 to rotate the rear wheel 32 through the drive wheel shaft 30.

A four-cycle engine is used as the engine 40 with its cylinder 50 being disposed upright. The engine 40 has left and right crankcases 51, 52 assembled to the engine 40, and a crankshaft 53 rotatably supported through bearings 54, 55 on the left and right crankcases 51, 52. A cylinder block 56 constituting the cylinder 50 is stacked on the left and right crankcases 51, 52. The engine 40 is air-cooled, with the cylinder block 56 and a cylinder head 57 respectively having cooling fins 56a, 57a, and with the cylinder head 57 being covered with a head cover 58.

A piston 61 is disposed for reciprocating within a cylinder sleeve 60 of the cylinder block 56. A piston pin 62 of the piston 61 is connected through a connecting rod 64 to the crank pin 63 of the crankshaft 53 to be rotated by the reciprocating movement of the piston 61 through the connecting rod 64. A combustion chamber 65 is defined with the cylinder block 56, the piston 61, and the cylinder head 57. An ignition plug 66 is attached to the cylinder head 57 so as to face the combustion chamber 65.

Cam shafts 68, 69 respectively on the intake and exhaust sides are rotatably journaled with the cylinder head 57 and a bearing cap 67. An intake valve and an exhaust valve (both not shown) are opened and closed at predetermined timings. Cam sprockets 70, 71 are attached to the ends of the cam shafts 68, 69 and connected through a cam chain 73 to a cam drive gear 72 of the crankshaft 53. In interlocked motion with the crankshaft 53, the cam shafts 68, 69 are rotated through the cam drive gear 72, the cam chain 73, and the cam sprockets 70, 71. The cam chain 73 is disposed in a cam chain chamber 74 defined with the crankcase 51, the cylinder block 56, and the cylinder head 57.

A balancer drive gear 76 press-fit onto the crankshaft 53 is disposed in a crank chamber 75 defined with the left and right crankcases 51, 52. The balancer drive gear 76 engages with a drive gear 78 of a balancer 77 journaled on the left and right crankcases 51, 52 and rotates as interlocked with the drive gear 78.

A crankcase cover 79 is provided on the left side crankcase 52. A starter drive gear 81 is attached through a one-way clutch 80 to the end of the crankshaft 53 projecting out of the crankcase 52. At the fore-end of the crankshaft 53 projecting out of the crankcase 52 is also provided a rotor side portion 82a of a generator 8. A stator side portion 82b of the generator 82 is secured to the crankcase cover 79. The starter drive gear 81 is interlocked through intermediate shafts 83, 84 with the output side of a starter motor 85. The starter motor 85 forcibly drives the crankshaft 53 through the intermediate shafts 83, 84, the starter drive gear 81, and the one-way clutch 80 so that the engine 40 is easily started.

A crankcase cover 86 is provided on the right side crankcase 51. An oil pump drive gear 87 and a centrifugal clutch 88 are provided on the end of the crankshaft 53 projecting out of the crankcase 51. The end of the crankshaft 53 is supported through a bearing 89 on the crankcase cover 86. An inside portion 88a of the centrifugal clutch 88 is disposed on the crankshaft 53 for rotating together. An outside portion 88b of the centrifugal clutch 88 is rotatably disposed. When the crankshaft 53 reaches a specified rotation speed, a lining 90 on the inside portion 88a is pressed by centrifugal force against a rotor 91 of the outside portion 88b to rotate together.

An output gear 93 is integrally formed with a rotor shaft portion 92 of the outside portion 88b. A power takeoff shaft 41 is rotatably supported through two bearings 94 on the crankcase 51. An input gear 95 is provided on part of the power takeoff shaft 41 on the outer side of the engine. A chain 96 is disposed between and around the output gear 93 of the rotor shaft portion 92 and the input gear 95 of the power takeoff shaft 41 so that power is transmitted from the crankshaft 53 through the centrifugal clutch 88 to the power takeoff shaft 41. Since the power on the crankshaft 53 is directly transmitted to the power takeoff shaft 41 by means of the chain 96, the crankcase 51 may be made in a small size. Furthermore, since the power takeoff shaft 41 is supported with a plural number of bearings 94 on one side only, no bearing is employed on the crankcase cover 86 side so that external dimension of the crankcase cover 86 may be reduced.

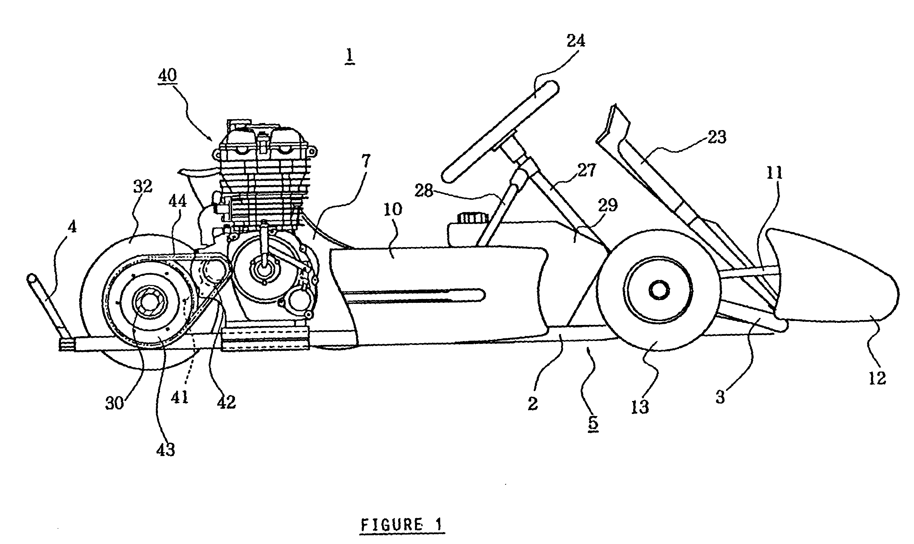

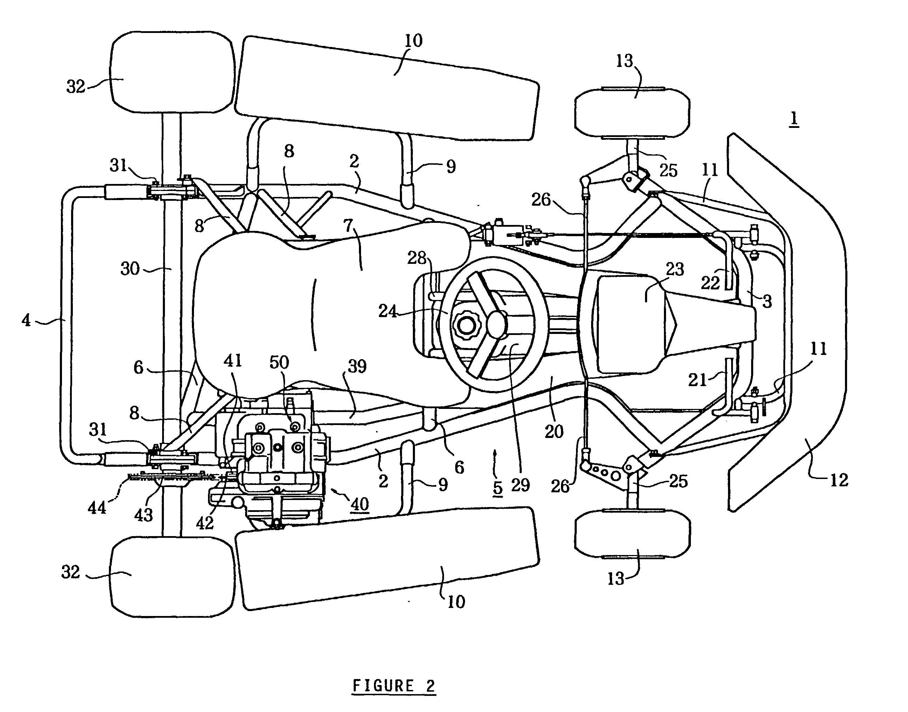

The drive sprocket 42 is provided on part of the power takeoff shaft 41 on the inner side of the engine. As shown in FIGs. 1 and 2, the drive sprocket 43 is provided on the drive wheel shaft 30 at a position outside the right side bearing 31 with respect to the vehicle body center. The chain 44 is installed between the drive sprocket 42 of the power takeoff shaft 41 and the drive sprocket 43 of the drive wheel shaft 30 to constitute a power transmission mechanism for transmitting power from the drive sprocket 42 to the drive wheel or the rear wheel 32.

Part of the right side crankcase 51 near the crankcase portion 51a covering the crank web 53a of the crankshaft 53 is recessed to form a space 99 in which the drive sprocket 42 is disposed. Power is transmitted from the crankshaft 53 through the centrifugal clutch 88 and the chain 96 to the power takeoff shaft 41, and taken out toward the inside of the engine. Since the drive sprocket 42 attached to the power takeoff shaft 41 is disposed near the crankcase center, the dimension of the engine 40 is reduced in the crankshaft 53 direction. As a result, degree of freedom of positioning the engine in the vehicle body is increased, the driver area is easily secured, and the engine may be mounted in a position to provide favorable weight distribution without adversely affecting the appropriate driver position and the sprocket position on the drive wheel side.

Furthermore, since the space 99 is provided by forming the recess near the crankcase portion 51a to dispose the drive sprocket 42, the distance between the power takeoff shaft 41 and the crankshaft 53 is reduced and accordingly the size of the engine 40 is reduced in the front-to-rear direction. As a result, the engine 40 may be positioned toward the rear of the vehicle body and accordingly the driver area is secured more easily. In particular, even though the engine height tends to be high when a four-cycle engine is employed, since the engine may be located toward the rear of the vehicle body, it does not stand in the way of the driver.

While the above embodiment is described in reference to a racing cart as a small vehicle 1, other embodiments may be similarly made with an amusement cart, a golf cart, and so on. Furthermore, the engine is not limited to a four-cycle engine but a two-cycle engine may also be used.

As described above, a space is provided by forming a recess near part of the crankcase covering the crank web of the crankshaft to dispose the drive sprocket in the space. As a result, the drive sprocket attached to the power takeoff shaft is disposed near the crankcase center, degree of freedom of positioning the engine in the vehicle body is increased, the driver area is easily secured, and the engine may be mounted in a position to provide favorable weight distribution without adversely affecting the appropriate driver position and the sprocket position on the drive wheel side.

Furthermore, positioning the drive sprocket in the recessed space near the crankcase portion makes it possible to reduce the distance between the power takeoff shaft and the crankshaft. Accordingly the engine is made compact and located toward the rear of the vehicle body so that the driver area is secured more easily.

## Claims

1. Small vehicle with an engine (40) mounted on a vehicle body (5), wherein the engine (40) comprises a power output shaft (41) transmitting power of the engine (40) from a drive sprocket (42) mounted on the power output shaft (41) toward a drive wheel (32),
**characterized in that** a part of a crankcase (51,52) in a vicinity of a crankcase portion (51a) covering a crank web (53a) is recessed to form a space (99) in which the drive sprocket (42) is disposed.

2. Small vehicle according to claim 1, **characterized in that** a crank-shaft (53) is bearing-supported on the crankcase (51,52) and said power output shaft (41) is drivingly connected with said crank-shaft (53).

3. Small vehicle according to claim 1 or 2, **characterized in that** said drive sprocket (42) is arranged at the rear of the engine (40) with respect to forward driving direction of the vehicle.

4. Small vehicle according to one of claims 1 to 3, **characterized in that** said crankcase (51,52) has at a lateral end a portion protruded rearwardly with respect to forward driving direction of the vehicle, the power output shaft (41) being pivoted in said protruded portion, and at the opposite lateral end another rearwardly protruded portion for receiving further drive means.

5. Small vehicle according to one of claims 2 to 4, **characterized in that** said power output shaft (41) is arranged substantially parallel to the crank-shaft (53).

6. Small vehicle according to one of claims 2 to 5, **characterized in that** said power output shaft (41) and said crank-shaft (53) are drivingly connected directly by a chain (96).

7. Small vehicle according to one of claims 1 to 6, **characterized in that** said power output shaft (41) at one end is drivingly connected with said crank-shaft (53) and at the other end is provided with said drive sprocket (42), and therebetween is supported on the crankcase.

8. Small vehicle according to one of claims 1 to 7, **characterized in that** said engine (40) is arranged aside a seat on the vehicle body and between said seat and the lateral edge of the vehicle body.

9. Small vehicle according to claim 8, **characterized in that** said engine (40) is arranged aside a rear portion of the seat.

10. Small vehicle according to one of claims 1 to 9, **characterized in that** the engine (40) is arranged with its cylinder (50) being disposed upright.

## Patentansprüche

1. Kleines Fahrzeug mit einem Motor (40), montiert auf einer Fahrzeugkarosserie (5), wobei der Motor (40) eine Leistungsabgabewelle (41) aufweist, die die Leistung des Motors (40) von einem Antriebskettenrad (42), montiert auf der Leistungsabgabewelle (41) in Richtung zu dem Antriebsrad (32), überträgt, **dadurch gekennzeichnet, dass** ein Teil eines Kurbelgehäuses (51, 52) in einer Nähe eines Kurbelgehäuseabschnittes (51a), der eine Kurbelscheibe (53a) abdeckt, ausgespart ist, um einen Raum (99) zu bilden, in dem das Antriebskettenrad (42) angeordnet ist.

2. Kleines Fahrzeug nach Anspruch 1, **dadurch gekennzeichnet, dass** eine Kurbelwelle (53) in dem Kurbelgehäuse (51, 52) durch Lager abgestützt ist und die Leistungsabgabewelle (41) mit der Kurbelwelle (53) antreibend verbunden ist.

3. Kleines Fahrzeug nach Anspruch 1 oder 2, **dadurch gekennzeichnet, dass** das Antriebskettenrad (42) auf der Rückseite des Motors (40) in Bezug zu der Vorwärtsantriebsrichtung des Fahrzeuges angeordnet ist.

4. Kleines Fahrzeug nach einem der Ansprüche 1 bis 3, **dadurch gekennzeichnet, dass** das Kurbelgehäuse (51, 52) an einem seitlichen Ende einen Abschnitt aufweist, der in Bezug zu der Vorwärtsantriebsrichtung des Fahrzeuges rückwärts vorspringt, wobei die Leistungsabgabewelle (41) in dem vorspringenden Abschnitt drehbar ist, und an dem gegenüberliegende seitlichen Ende ein weiterer rückwärtiger vorspringende Abschnittes vorgesehen ist, zum Aufnehmen weiterer Antriebseinrichtungen.

5. Kleines Fahrzeug nach einem der Ansprüche 2 bis 4, **dadurch gekennzeichnet, dass** das die Leistungsabgabewelle (41) im Wesentlichen parallel zu der Kurbelwelle (53) angeordnet ist.

6. Kleines Fahrzeug nach einem der Ansprüche 2 bis 5, **dadurch gekennzeichnet, dass** die Leistungsabgabewelle (41) und die Kurbelwelle (53) direkt durch eine Kette (96) antreibend verbunden sind.

7. Kleines Fahrzeug nach einem der Ansprüche 1 bis 6, **dadurch gekennzeichnet, dass** die Leistungsabgabewelle (41) an einem Ende antreibend mit der Kurbelwelle (53) verbunden ist und an dem anderen Ende mit dem Antriebskettenrad (42) versehen ist und dazwischen an dem Kurbelgehäuse gelagert ist.

8. Kleines Fahrzeug nach einem der Ansprüche 1 bis 7, **dadurch gekennzeichnet, dass** der Motor (40) neben einem Sitz an der Fahrzeugkarosserie zwischen dem Sitz und der seitlichen Kante der Fahrzeugkarosserie angeordnet ist.

9. Kleines Fahrzeug nach Anspruch 8, **dadurch gekennzeichnet, dass** der Motor (40) seitlich eines hinteren Abschnittes des Sitzes angeordnet ist.

10. Kleines Fahrzeug nach einem der Ansprüche 1 bis 9, **dadurch gekennzeichnet, dass** der Motor (40) mit seinem Zylinder (50) aufrecht angeordnet ist.

## Revendications

1. Petit véhicule comprenant un moteur (40) monté sur un corps de véhicule (5), dans lequel le moteur (40) comprend un arbre de sortie de puissance (41) transmettant la puissance du moteur (40) à partir d'une roue d'entraînement dentée (42) montée sur l'arbre de sortie de puissance (41) vers une roue motrice (32), **caractérisé en ce qu'**une partie d'un carter moteur (51, 52) située à proximité d'une partie de carter moteur (51a) recouvrant une masse d'équilibrage (53a) comporte un retrait destiné à former un espace (99) dans lequel est disposée la roue d'entraînement dentée (42).

2. Petit véhicule selon la revendication 1, **caractérisé en ce qu'**un vilebrequin (53) est supporté par des paliers sur le carter moteur (51, 52) et **en ce que** ledit arbre de sortie de puissance (41) est connecté en entraînement avec ledit vilebrequin (53).

3. Petit véhicule selon la revendication 1 ou 2, **caractérisé en ce que** ladite roue d'entraînement dentée (42) est disposée à l'arrière du moteur (40) par rapport à la direction d'avancement vers l'avant du véhicule.

4. Petit véhicule selon l'une quelconque des revendications 1 à 3, **caractérisé en ce que** ledit carter moteur (51, 52) comporte sur une extrémité latérale une partie en saillie vers l'arrière par rapport à la direction d'avancement vers l'avant du véhicule, l'arbre de sortie de puissance (41) étant en pivotement dans ladite partie en saillie, et **en ce que**, sur l'extrémité latérale opposée, une autre partie en saillie vers l'arrière est destinée à recevoir d'autres moyens d'entraînement.

5. Petit véhicule selon l'une quelconque des revendications 2 à 4, **caractérisé en ce que** ledit arbre de sortie de puissance (41) est disposé de manière essentiellement parallèle au vilebrequin (53).

6. Petit véhicule selon l'une quelconque des revendications 2 à 5, **caractérisé en ce que** ledit arbre de sortie de puissance (41) et ledit vilebrequin (53) sont connectés directement en entraînement par une chaîne (96).

7. Petit véhicule selon l'une quelconque des revendications 1 à 6, **caractérisé en ce que** ledit arbre de sortie de puissance (41), à une extrémité, est connecté en entraînement avec ledit vilebrequin (53), et à l'autre extrémité, comporte ladite roue d'entraînement dentée (42), et **en ce que** la partie intermédiaire est supportée par le carter moteur.

8. Petit véhicule selon l'une quelconque des revendications 1 à 7, **caractérisé en ce que** ledit moteur (40) est disposé sur le côté d'un siège monté sur le corps de véhicule et entre ledit siège et le bord latéral du corps de véhicule.

9. Petit véhicule selon la revendication 8, **caractérisé en ce que** ledit moteur (40) est disposé sur le côté d'une partie arrière du siège.

10. Petit véhicule selon l'une quelconque des revendications 1 à 9, **caractérisé en ce que** ledit moteur (40) est aménagé de telle sorte que son cylindre (50) est disposé à la verticale.
